# EUROPEAN PATENT APPLICATION

(11) **EP 3 187 705 A1**
(43) Date of publication of application: **05.07.2017**
(21) Application number: 15836452.1
(22) Date of filing: 11.08.2015
(51) Int. Cl.: F01L 1/352, F16H 1/32

(54) **VALVE OPENING/CLOSING TIMING CONTROL DEVICE**

(30) Priority: 25.08.2014 JP 2014170574
(71) Applicant: Aisin Seiki Kabushiki Kaisha, Kariya-shi, Aichi 448-8650 (JP)
(72) Inventor: MIYACHI, Eiji, Kariya-shi, Aichi 448-8650 (JP); TOMA, Naoto, Kariya-shi, Aichi 448-8650 (JP); IGUCHI, Yoshiaki, Kariya-shi, Aichi 448-8650 (JP); NAGATA, Eiri, Kariya-shi, Aichi 448-8650 (JP); KURITA, Nobuaki, Kariya-shi, Aichi 448-8650 (JP); TAKEUCHI, Masayoshi, Kariya-shi, Aichi 448-8650 (JP); TSUJIMOTO, Katsuhiro, Kariya-shi, Aichi 448-8650 (JP)
(74) Representative: Winter, Brandl, Fürniss, Hübner, Röss, Kaiser, Polte - Partnerschaft mbB
(86) International application number: PCT/JP2015/072739
(87) International publication number: WO 2016/031557

(57) **Abstract**

A valve opening and closing timing control apparatus which restrains generation of hitting sound in a case where a driven-side rotation member and a driving-side rotation member rotate relative to each other by an electric actuator includes a phase adjustment mechanism of a gear type specifying a relative rotation phase between the driving-side rotation member which rotates synchronously with a crankshaft and the driven-side rotation member which rotates integrally with at least one of an intake camshaft and an exhaust camshaft by a driving force of the electric actuator, the phase adjustment mechanism causing a revolution of a position of an eccentric axis about a rotation axis by the driving force of the electric actuator so that an input gear connected to the driven-side rotation member via an Oldham coupling rotates relative to an output gear fixed to the driven-side rotation member, a groove portion in a linear form and a protruding portion in a rectangular form in the Oldham coupling slidably engaging with each other between the driving-side rotation member and an Oldham ring, a groove portion in a linear form and a protruding portion in a rectangular form in the Oldham coupling slidably engaging with each other between the Oldham ring and the input gear.

## Description

### TECHNICAL FIELD

The present invention relates to a valve opening and closing timing control apparatus controlling a relative rotation phase between a driving-side rotation member which rotates synchronously with a crankshaft and a driven-side rotation member which is supported to be rotatable relative to the driving-side rotation member and which integrally rotates with at least one of an intake camshaft and an exhaust camshaft.

### BACKGROUND ART

A valve opening and closing timing control apparatus has been utilized to control opening and closing timing of an intake valve and an exhaust valve based on an operation condition of an engine. A technique related to such valve opening and closing timing control apparatus is disclosed in, for example, Patent documents 1 and 2 as blow.

A camshaft adjustment apparatus of an internal combustion engine disclosed in Patent document 1 electrically adjusts a relative rotational angle position between a camshaft of the internal combustion engine and a crankshaft of the internal combustion engine by use of a two-stage planetary gear including a driving portion fixed to the crankshaft, a driven portion fixed to the camshaft and an adjusting shaft connected to an adjustment unit shaft of an electrical adjustment unit. An Oldham coupling is provided between the adjusting shaft and the adjustment unit shaft.

A valve timing adjustment apparatus disclosed in Patent document 2 adjusts opening and closing timing of at least one of an intake valve and an exhaust valve. The valve timing adjustment apparatus is configured to include a rotary member rotating about a driven axis by a driving torque of a driving shaft, a planetary gear rotating about the driven axis with the rotation of the rotary member and an output shaft rotating about the driven axis integrally with a driven shaft with the rotation of the planetary gear. An axis of the output shaft is provided to be eccentric to an axis of the planetary gear. In order to transmit rotation power between the output shaft and the planetary gear, engagement bores are provided at the output shaft while engagement projections are provided at the planetary gear so that each of the engagement projections including an outer diameter smaller than an inner diameter of each of the engagement bores engages with the engagement bore.

### DOCUMENT OF PRIOR ART

### PATENT DOCUMENT

Patent document 1: JP2006-300068A
Patent document 2: JP2004-3419A

### OVERVIEW OF INVENTION

### PROBLEM TO BE SOLVED BY INVENTION

In the technique disclosed in Patent document 1, the two-stage planetary gear is employed. Thus, a portion where gears are meshed increases, which may enlarge a gap caused by a manufacturing error. In addition, in a dynamic valve system of the engine, torque fluctuation occurs when a valve spring and the camshaft rotate. Thus, within a valve opening and closing timing control apparatus, positive and negative revers operations occur at the aforementioned portion where the gears are meshed, which may generate hitting sound resulting from the aforementioned gap. Further, an axial direction of the apparatus is elongated because the two-step planetary gear is employed as mentioned above.

In the technique disclosed in Patent document 2, the two members which are eccentric to each other transmit the rotation power via the engagement bores and the engagement projections each of which includes the smaller outer diameter than the inner diameter of the engagement bore. At this time, the engagement bores and the engagement projections are provided in a circumferential direction at the respective members. In order to transmit the rotation power, the engagement projections which are inserted to be positioned within the respective engagement bores are required to make contact with inner peripheral surfaces of the engagement bores. Nevertheless, an error may occur upon processing of the bore in a circular form or the projection in a column form. A gap is possibly generated between any of the engagement bores and any of the engagement projections. Thus, hitting sound may be constantly generated resulting from the aforementioned gap when the rotation power is transmitted. Specifically, large hitting sound may occur when input torque fluctuates.

An object of the present invention is, in view of the aforementioned drawback, to provide a valve opening and closing timing control apparatus which may restrain generation of hitting sound in a case where a driven-side rotation member and a driving-side rotation member rotate relative to each other by an electric actuator.

### MEANS FOR SOLVING PROBLEM

According to a characteristic construction of a valve opening and closing timing control apparatus of the present invention, the valve opening and closing timing control apparatus includes a driving-side rotation member rotating synchronously with a crankshaft about a rotation axis, a driven-side rotation member supported to be rotatable about the rotation axis relative to the driving-side rotation member, the driven-side rotation member rotating integrally with at least one of an intake camshaft and an exhaust camshaft, and a phase adjustment mechanism of a gear type specifying a relative rotation phase between the driving-side rotation member and the driven-side rotation member by a driving force of an electric actuator, the phase adjustment mechanism including an output gear arranged coaxially with the rotation axis and fixed to the driven-side rotation member and an input gear arranged coaxially with an eccentric axis which is parallel to the rotation axis and connected to the driving-side rotation member via an Oldham coupling, the input gear being configured to rotate relative to the output gear by an angle corresponding to a difference between a teeth number of the output gear and a teeth number of the input gear based on a revolution of a position of the eccentric axis about the rotation axis by the driving force of the electric actuator in a state where a portion of a teeth portion of the output gear is meshed with a portion of a teeth portion of the input gear, the Oldham coupling including an Oldham ring arranged between the driving-side rotation member and the input gear, a groove portion in a linear form and a protruding portion in a rectangular form being arranged between the driving-side rotation member and the Oldham coupling, the groove portion being provided at one of the driving-side rotation member and the Oldham ring facing each other and the protruding portion being provided at the other of the driving-side rotation member and the Oldham ring, the groove portion and the protruding portion slidably engaging with each other, a groove portion in a linear form and a protruding portion in a rectangular form being arranged between the Oldham ring and the input gear, the groove portion being provided at one of the Oldham ring and the input gear facing each other and the protruding portion being provided at the other of the Oldham ring and the input gear, the groove portion and the protruding portion slidably engaging with each other.

According to the construction where the Oldham coupling is employed, each of the groove in the linear form and the protruding portion in the rectangular form may be provided along a single reference line at each of the members between the driving-side rotation member and the Oldham ring or between the Oldham ring and the input gear. Thus, as compared to a case where a bore in a circular form or a projection in a column form is processed for producing a power transmission coupling as in a known technique, processing accuracy such as a reduced clearance between members, for example, may increase. Therefore, in a case where the driven-side rotation member rotates relative to the driving-side rotation member, generation of hitting sound is restrained. Specifically, even when sudden torque fluctuation occurs during the rotation, generation of hitting sound may be restrained. Further, transmission efficiency may be enhanced.

In addition, it is favorable that the input gear includes a flat surface orthogonal to the rotation axis, and one of the protruding portion and the groove portion is provided at the input gear to extend radially inward from an outer circumferential edge of the flat surface of the input gear.

According to the aforementioned construction, the protruding portion may be provided at a position with a maximum radial length in one of the input gear and the Oldham ring where the protruding portion is provided, which may reduce looseness upon power transmission between the input gear and the Oldham ring resulting from gap dimensions therebetween. Thus, generation of hitting sound may decrease.

In addition, it is favorable that the Oldham ring includes a recess portion at a surface where one of the groove portion and the protruding portion is provided, the recess portion being arranged at a position where the one of the groove portion and the protruding portion is inhibited from being provided.

According to the aforementioned construction, the Oldham ring may be reduced in weight to thereby decrease inertia moment acting on the Oldham ring. Accordingly, the apparatus with improved responsiveness upon changing valve opening and closing timing is obtainable.

In addition, it is favorable that the protruding portion provided at one of the driving-side rotation member and the Oldham ring between the driving-side rotation member and the Oldham ring is positioned radially outward relative to the protruding portion provided at one of the Oldham ring and the input gear between the Oldham ring and the input gear.

Accordingly, the protruding portion provided at one of the driving-side rotation member and the Oldham ring between the driving-side rotation member and the Oldham ring is positioned radially outward relative to the protruding portion provided at one of the Oldham ring and the input gear between the Oldham ring and the input gear, which may reduce looseness upon power transmission between the driving-side rotation member and the Oldham ring resulting from gap dimensions therebetween. Thus, the backlash unlikely occurs between the driving-side rotation member and the Oldham ring. Because accumulation of backlash upon transmission of the driving force via the Oldham coupling may be minimized, generation of hitting sound may be reduced.

### BRIEF DESCRIPTION OF DRAWINGS

[Fig. 1] is a lateral cross-sectional view of a valve opening and closing timing control apparatus;
[Fig. 2] is a cross-sectional view taken along a line II-II in Fig. 1;
[Fig. 3] is a cross-sectional view taken along a line III-III in Fig. 1; and
[Fig. 4] is an exploded perspective view of the valve opening and closing timing control apparatus.

### MODE FOR CARRYING OUT THE INVENTION

A valve opening and closing timing control apparatus according to the present invention decreases generation of hitting sound in a case where a driven-side rotation member and a driving-side rotation member rotate relative to each other by an electric actuator. In the following, a valve opening and closing timing control apparatus 1 of the embodiment is explained.

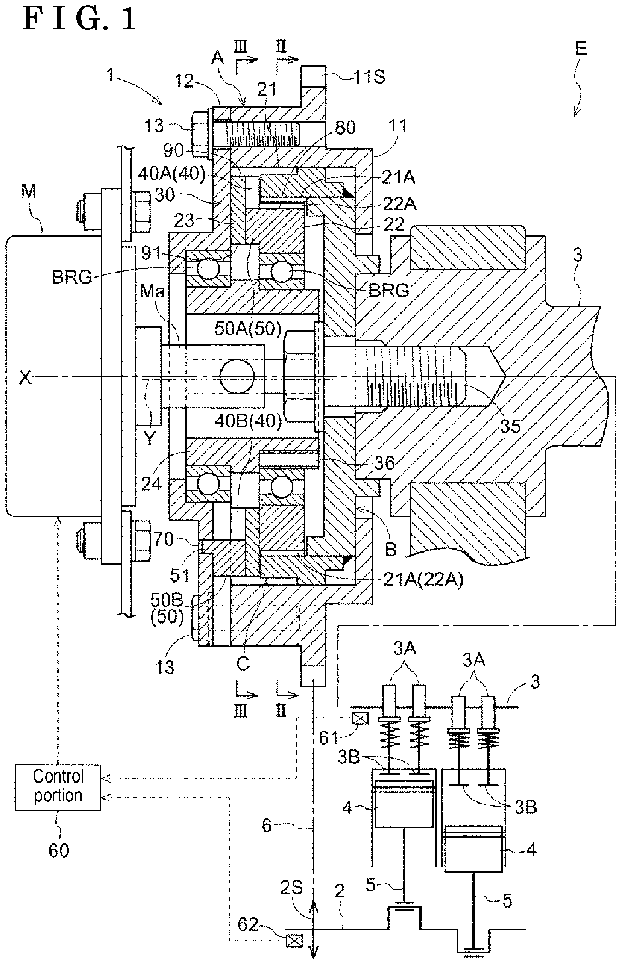

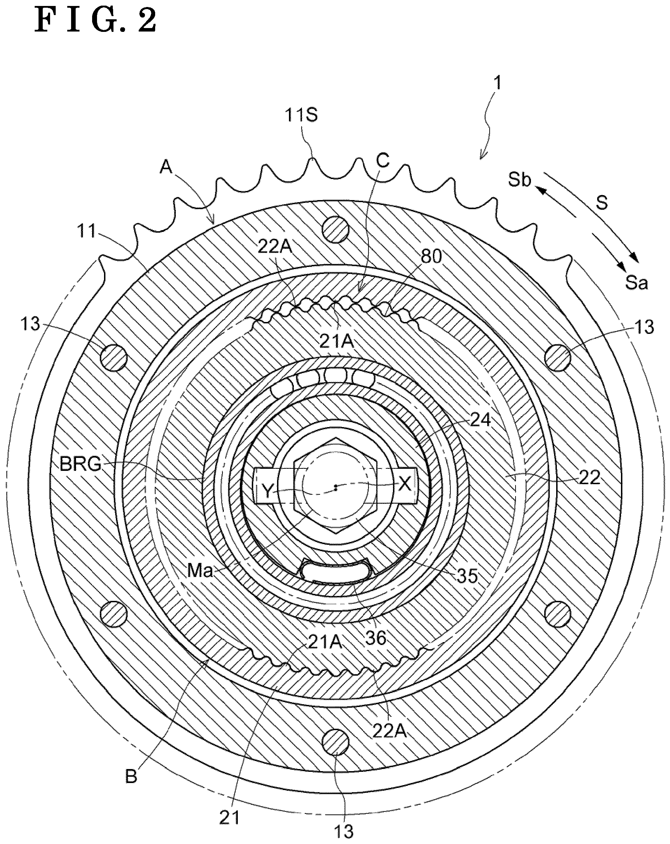

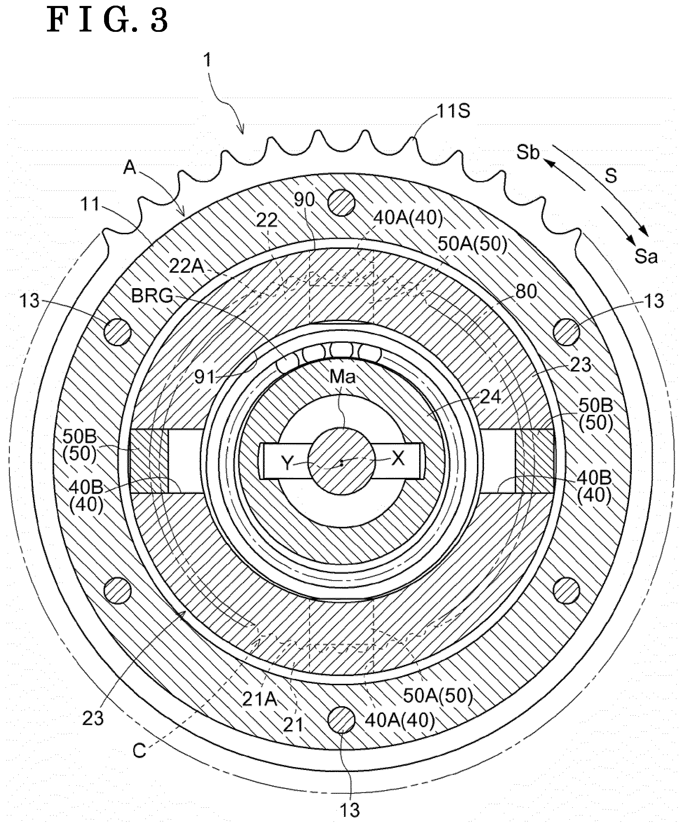

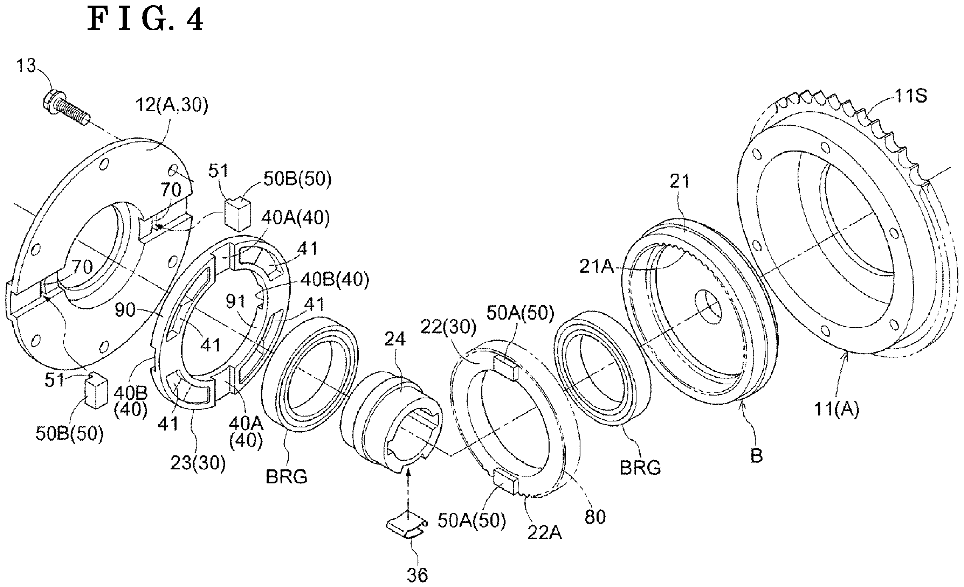

Fig. 1 illustrates a lateral cross-sectional view of the valve opening and closing timing control apparatus 1. Fig. 2 illustrates a cross-sectional view taken along a line II-II in Fig. 1. Fig. 3 illustrates a cross-sectional view taken along a line III-III in Fig. 1. Fig. 4 illustrates an exploded perspective view of a main portion of the valve opening and closing timing control apparatus. As illustrated in Fig. 1, the valve opening and closing timing control apparatus 1 is provided at an engine E so as to control one of or both of each intake valve 3B and each exhaust valve for purposes of increasing fuel consumption.

In the embodiment, the engine E is constituted as a four-cycle engine where pistons 4 are slidably housed within respective plural cylinder bores provided at a cylinder block so that the pistons 4 are connected to a crankshaft 2 by respective connecting rods 5. At this time, the engine E is assumed to be provided at a vehicle such as an automobile, for example. The engine E may also be provided at a vehicle such as other than the automobile, for example. In addition, the engine E may be provided at a vehicle where the engine E serves as a drive source or at a hybrid vehicle where the engine E and an electric motor serve as driving sources.

The valve opening and closing timing control apparatus 1 is configured to include a driving-side rotation member A, a driven-side rotation member B and a phase adjustment mechanism C. The driving-side rotation member A includes a rear case 11 and a front case 12 which are integrally fixed to each other by connection bolts 13. A drive sprocket 11S is provided at an outer peripheral side of the rear case 11 to be coaxial with the rear case 11. A power transmission member 6 such as a timing chain and a timing belt, for example, is would over the drive sprocket 11S and an output sprocket 2S of the crankshaft 2. Accordingly, the driving-side rotation member A rotates synchronously with the crankshaft 2 about a rotation axis X. In the embodiment, the driving-side rotation member A rotates in a direction indicated by an arrow S in Figs. 2 and 3 by driving of the engine E.

The driven-side rotation member B is disposed at a housing void surrounded by the rear case 11 and the front case 12 and is fixed to a tip end portion of an intake camshaft 3 by a connection bolt 35. The driven-side rotation member B is supported to be rotatable relative to the driving-side rotation member A with the rotation of the driving-side rotation member A about the rotation axis X via an Oldham coupling 30 which is explained later. The driven-side rotation member B rotates integrally with the intake camshaft 3. In the embodiment, the driven-side rotation member B is driven to rotate in a rotation direction S to thereby rotate the intake camshaft 3. Cams 3A provided at the intake camshaft 3 press down the intake valves 3B of the engine E so that the intake valves 3B are opened.

The phase adjustment mechanism C specifies a relative rotation phase between the driving-side rotation member A and the driven-side rotation member B by a driving force of an electric actuator M. The phase adjustment mechanism C is constituted as a gear type including an output gear and an input gear. The output gear outputs rotation power from the phase adjustment mechanism C while the input gear inputs rotation power to the phase adjustment mechanism C. In the embodiment, the output gear corresponds to a ring gear 21 and the input gear corresponds to an inner gear 22. Unless otherwise specified, in the following explanation, the output gear is the ring gear 21 and the input gear is the inner gear 22.

The ring gear 21 is arranged coaxially with the rotation axis X and is tightened and fixed to the driven-side rotation member B. As mentioned above, the driven-side rotation member B is tightened and fixed to the intake camshaft 3 by the connection bolt 35. Accordingly, the ring gear 21 rotates together with the driven-side rotation member B. The ring gear 21 includes plural teeth portions 21A at an inner periphery.

The inner gear 22 is arranged coaxially with an eccentric axis Y which is parallel to the rotation axis X and is connected to the front case 12 constituting the driving-side rotation member A via the Oldham coupling 30. The inner gear 22 is outwardly fitted to an eccentric ring 24 via a bearing BRG so as to be eccentric to the rotation axis X and is supported to be rotatable about the eccentric axis Y which is parallel to the rotation axis X. A spring member 36 is disposed at an outer periphery of the eccentric ring 24 via the bearing BRG so as to restrain generation of hitting sound caused by backlash over and between the inner gear 22 and the ring gear 21.

The eccentric ring 24 is eccentric to the rotation axis X at one axial side and is coaxial with the rotation axis X at the other axial side. The other axial side of the eccentric ring 24 is rotatably supported at the front case 12 via the bearing BRG.

The rotation power is transmitted to the inner gear 22 from the driving-side rotation member A. Because the driving-side rotation member A rotates about the rotation axis X and the inner gear 22 rotates about the eccentric axis Y, an Oldham ring 23 is arranged between the driving-side rotation member A and the inner gear 22 for transmitting the rotation power from the driving-side rotation member A to the inner gear 22.

Plural teeth portions 22A are provided at an outer periphery of the inner gear 22. The teeth portions 22A include the number of teeth smaller than the number of teeth of the plural teeth portions 21A provided at the inner periphery of the ring gear 21. Specifically, the number of teeth of the teeth portions 22A of the inner gear 22 is specified to be one less than the number of teeth of the teeth portions 21A of the ring gear 21 (for example, in a case where the teeth number of the ring gear 21 is 100, the teeth number of the inner gear 22 is specified to 99). As mentioned above, the inner gear 22 is supported to be rotatable about the eccentric axis Y which is eccentric to the rotation axis X serving as a rotation center of the ring gear 21. A portion of the teeth portions 22A of the inner gear 22 is meshed with a portion of the teeth portions 21A of the ring gear 21.

Because of the aforementioned meshing, according to the phase adjustment mechanism C, the inner gear 22 rotates relative to the ring gear 21 by an angle corresponding to a difference between the number of teeth of the teeth portions 21A of the ring gear 21 and the number of teeth of the teeth portions 22A of the inner gear 22 based on a revolution of a position of the eccentric axis Y about the rotation axis X by the driving force of the electric actuator M. Because of such relative rotation, the position at which the ring gear 21 and the inner gear 22 are meshed with each other is changed to achieve setting of the relative rotation phase of the driven-side rotation member B relative to the driving-side rotation member A.

At this time, in the valve opening and closing timing control apparatus 1, the intake camshaft 3 rotates by the driving-side rotation member A along with the operation of the engine E. On the other hand, an output shaft Ma of the electric actuator M is driven in a predetermined direction in an operating condition of the engine E so that the position of the inner gear 22 where the inner gear 22 is partially meshed with the ring gear 21 is inhibited from being changed. The electric actuator M is driven by a control portion 60 on a basis of a detection result of a camshaft sensor 61 detecting a rotation phase of the intake camshaft 3 and a detection result of a crankshaft sensor 62 detecting a rotation phase of the crankshaft 2. Specifically, the control portion 60 detects the relative rotation phase based on the detection results of the camshaft sensor 61 and the crankshaft sensor 62 to determine that which phase the relative rotation phase is positioned. In addition, the control portion 60 stores control information of an optimum relative rotation phase depending on the operating condition of the engine E. The control portion 60 controls the relative rotation phase by driving the electric actuator M depending on the operating condition of the engine E.

The control portion 60 controls a rotation speed of the output shaft Ma of the electric actuator M so that the rotation speed is equalized with a rotation speed of the intake camshaft 3 for not changing the relative rotation phase of the driven-side rotation member B relative to the driving-side rotation member A. The control portion 60 controls the rotation speed of the output shaft Ma of the electric actuator M so that the rotation speed is faster than the rotation speed of the intake camshaft 3 for displacing the relative rotation phase of the driven-side rotation member B relative to the driving-side rotation member A in an advanced angle direction Sa. The control portion 60 controls the rotation speed of the output shaft Ma of the electric actuator M so that the rotation speed is slower than the rotation speed of the intake camshaft 3 for displacing the relative rotation phase in a retarded angle direction Sb. Because of such control, the relative rotation phase of the driven-side rotation member B relative to the driving-side rotation member A may be specified at a desired phase.

The Oldham coupling 30 is configured to include the driving-side rotation member A, the inner gear 22 and the Oldham ring 23 provided between the driving-side rotation member A and the inner gear 22. The driving-side rotation member A corresponds to an input portion of the Oldham coupling 30 and the inner gear 22 corresponds to an output portion of the Oldham coupling 30. The Oldham ring 23 transmits the rotation power to the driving-side rotation member A and the inner gear 22 including different rotation centers from each other.

In order to efficiently transmit the aforementioned rotation power, groove portions 40 each of which is in a linear form and protruding portions 50 each of which is in a rectangular form are disposed between the driving-side rotation member A and the Oldham ring 23 and between the Oldham ring 23 and the inner gear 22. The groove portions 40 provided at one of the driving-side rotation member A and the Oldham ring 23 facing each other and the protruding portions 50 provided at the other of the driving-side rotation member A and the Oldham ring 23 sliadably engage with one another. In addition, the groove portions 40 provided at one of the Oldham ring 23 and the inner gear 22 facing each other and the protruding portions 50 provided at the other of the Oldham ring 23 and the inner gear 22 sliadably engage with one another. In the embodiment, between the driving-side rotation member A and the Oldham ring 23, protruding portions 50B are provided at a surface of the front case 12 constituting the driving-side rotation member A, the surface facing the Oldham ring 23, while groove portions 40B are provided at a surface of the Oldham ring 23 facing the front case 12. In addition, between the Oldham ring 23 and the inner gear 22, groove portions 40A are provided at a surface of the Oldham ring 23 facing the inner gear 22 while protruding portions 50A are provided at a surface of the inner gear 22 facing the Oldham ring 23. In the following, in a case where the groove portions 40A and 40B are not necessarily distinguished from one another, the groove portions are simply indicated as the groove portions 40. In the same manner, in a case where the protruding portions 50A and 50B are not necessarily distinguished from one another, the protruding portions are simply indicated as the protruding portions 50.

As illustrated in Fig. 4, a pair of groove portions 40 is provided at each of the axially opposed side surfaces of the Oldham ring 23. The pair of groove portions 40 is provided to face each other relative to the axis while extending in a radial direction of the Oldham ring 23. In addition, the pair of groove portions 40A at one of the axially opposed side surfaces and the pair of groove portions 40B at the other of the axially opposed side surfaces are provided orthogonal to one another in an axial view of the Oldham ring 23.

A pair of protruding portions 50A is provided facing each other relative to the axis of the inner gear 22. Each of the protruding portions 50A includes a rectangular shape in a state where the inner gear 22 is viewed in the axial direction. The width of the protruding portion 50A is specified to be slightly smaller than the width of the groove portion 40 in a state where the inner gear 22 is viewed in the axial direction. Thus, the protruding portion 50A is slidably movable within the groove portion 40A along with a rotation as the Oldham coupling 30.

Because the groove portion 40A is linearly formed and the protruding portion 50A is formed in a rectangular configuration, a contact surface thereof may increase. As a result, looseness may be reduced. In addition, because a load per unit area of a contact portion of each of the groove 40A and the protruding portion 50A decreases, durability of the groove portion 40A and the protruding portion 50A may increase.

The inner gear 22 includes a flat surface orthogonal to the rotation axis. The protruding portion 50A is provided at the inner gear 22 to extend radially inward from an outer circumferential edge 80 of the flat surface of the inner gear 22. The groove portion 40A is provided to open to an outer peripheral surface 90 and an inner peripheral surface 91 of the Oldham ring 23. Accordingly, as illustrated in Fig. 1, the protruding portion 50A may be provided at a position with a maximum radial length in the inner gear 22, which may reduce looseness upon power transmission between the inner gear 22 and the Oldham ring 23 resulting from gap dimensions therebetween. Thus, the backlash unlikely occurs between the inner gear 22 and the Oldham ring 23, which may decrease generation of hitting sound.

In the embodiment, a pair of recess portions 70 is provided at the surface of the front case 12 of the driving-side rotation member A, the surface facing the other of the axially opposed side surfaces of the Oldham ring 23. The pair of recess portions 70 faces each other relative to the axis of the driving-side rotation member A. A key portion 51 of the protruding portion 50B which is slidably engageable with the groove portion 40B of the Oldham ring 23 is fitted to each of the recess portions 70. The protruding portion 50B including the aforementioned key portion 51 may be produced by cutting a bar-formed member which is formed with a predetermined protruding cross-section beforehand, for example. The protruding portion 50B may be easily configured accordingly. The protruding portion 50B includes a rectangular shape in a state where the driving-side rotation member A is viewed in the axial direction in the same way as the aforementioned protruding portion 50A. The protruding portion 50B is slidably movable within the groove portion 40B along with the rotation as the Oldham coupling 30.

Each of the protruding portions 50B provided at the front case 12 is disposed at the radially outer side of the front case 12 wherever possible as illustrated in Figs. 1 and 4 so as to reduce looseness upon power transmission between the front case 12 and the Oldham ring 23 resulting from gap dimensions therebetween. As a result, the backlash unlikely occurs between the front case 12 and the Oldham ring 23, which may decrease generation of hitting sound.

Fig. 3 illustrates a positional relation between the protruding portions 50A provided at the inner gear 22 and the protruding portions 50B provided at the front case 12. As illustrated in Fig. 3, the protruding portions 50B provided at the front case 12 between the front case 12 and the Oldham ring 23 are positioned radially outward than the protruding portions 50A provided at the inner gear 22 between the Oldham ring 23 and the inner gear 22. That is, the protruding portions 50A at the inner gear 22 engage at the side of the inner peripheral surface 91 of the Oldham ring 23 while the protruding portions 50B at the front case 12 engage at the side of the outer peripheral surface 90 of the Oldham ring 23. In order to decrease the backlash as mentioned above, the protruding portions 50A and 50B are desirably positioned radially outward wherever possible at the inner gear 22 and the front case 12 respectively. Therefore, in the inner gear 22, the protruding portions 50A are arranged towards a radially inner side from a position at which the outer diameter is at maximum within a range not interfering with the teeth portions 22A provided at the outer periphery of the inner gear 22. In the front case 12, the protruding portions 50B are provided towards a radially inner side from a position at which the outer diameter is at maximum within a range not interfering with the rear case 11. The Oldham ring 23 is provided along with the aforementioned protruding portions 50A and 50B. As a result, as illustrated in Fig. 3, the protruding portions 50A and the protruding portions 50B are provided at different positions from each other in the radial direction. Accordingly, the protruding portions 50A and the protruding portions 50B are positioned as far to the outer side as possible so that accumulation of backlash upon transmission of the driving force via the Oldham coupling 30 may be minimized.

The groove portions 40 are provided at the axially opposed side surfaces of the Oldham ring 23. Recess portions 41 are provided at the respective surfaces so as to be positioned different from the positions of the groove portions 40. The recess portions 41 extend in a circumferential direction of the Oldham ring 23. Because of the recess portions 41, the Oldham ring 23 may be reduced in weight to thereby decrease inertia moment acting on the Oldham ring 23. Accordingly, the apparatus with improved responsiveness upon changing the valve opening and closing timing is obtainable. Each of the recess portions 41 may not necessarily penetrate in the axial direction of the Oldham ring 23 or may penetrate through. In a case where the recess portion 41 is inhibited from penetrating through, the depth of the recess portion 41 decreases as approaching the groove portion 40 and increases as separating from the groove portion 40.

### [Other embodiments]

In the aforementioned embodiment, the driven-side rotation member B rotates integrally with the intake camshaft 3. Alternatively, the driven-side rotation member B may be configured to integrally rotate with the exhaust camshaft or the driven-side rotation member B may be configured to integrally rotate with both the intake camshaft 3 and the exhaust camshaft.

In the aforementioned embodiment, the output gear of the phase adjustment mechanism C is the ring gear 21 while the input gear is the inner gear 22. Alternatively, the output gear may be configured to be the inner gear 22 while the input gear may be configured to be the ring gear 21.

In the aforementioned embodiment, the groove portions 40 are provided at the axially opposed side surfaces of the Oldham ring 23 while the protruding portions 50 are provide at the respective surfaces of the driving-side rotation member A and the input gear, the respective surfaces facing the Oldham ring 23. Alternatively, the groove portions 40 may be configured to be provided only at one of the axially opposed side surfaces of the Oldham ring 23 and the protruding portions 50 may be configured to be provided at the other of the axially opposed side surfaces of the Oldham ring 23. Further alternatively, the protruding portions 50 may be configured to be provided at the axially opposed side surfaces of the Oldham ring 23. In this case, the groove portions 40 may be configured at respective surfaces of the driving-side rotation member A and the input gear, the respective surfaces facing the protruding portions 50 at the Oldham ring 23.

In the aforementioned embodiment, the recess portions 41 are positioned at different positions from the positions of the groove portions 40 at the surfaces of the Oldham ring 23 where the groove portions 40 are provided. Alternatively, in a case where the protruding portions 50 are provided at the Oldham ring 23, the recess portions 41 may be positioned at different positions from the positions of the protruding portions 50 at the surface where the protruding portions 50 are provided.

In the aforementioned embodiment, the protruding portion 50 is provided at the inner gear 22 to extend radially inward from the outer circumferential edge 80 of the flat surface of the inner gear 22. Alternatively, the protruding portion 50 may be provided towards radially inward from the outer peripheral surface 90 of the Oldham ring 23. In this case, the protruding portion 50 may be disposed at the position where the radial length is at maximum. Thus, looseness upon power transmission between the inner gear 22 and the Oldham ring 23 resulting from the gap dimensions therebetween may be reduced. As a result, generation of hitting sound may be further reduced.

In the aforementioned embodiment, the recess portions 70 are provided at the surface of the front case 12 of the driving-side rotation member A facing the Oldham ring 23 so that the key portions 51 of the protruding portions 50 are fitted to the respective recess portions 70. Alternatively, the protruding portions 50 may be integrally provided at the front case 12.

In the aforementioned embodiment, the protruding portion 50B is provided at the radially outer side than the protruding portion 50A. Alternatively, the protruding portion 50B may be provided at a radially inner side than the protruding portion 50A. Further alternatively, the protruding portion 50B and the protruding portion 50A may be provided at the same positions in the radial direction. The position relation between the protruding portion 50B and the protruding portion 50A is applicable to any case where the protruding portion 50A is provided at one of the front case 12 and the Oldham ring 23 and the protruding portion 50B is provided at one of the Oldham ring 23 and the inner gear 22.

### INDUSTRICAL APPLICABILITY

The present invention is applicable to a valve opening and closing timing control apparatus controlling a relative rotation phase between a driving-side rotation member which rotates synchronously with a crankshaft and a driven-side rotation member which is supported to be rotatable relative to the driving-side rotation member and which integrally rotates with at least one of an intake camshaft and an exhaust camshaft.

### EXPLANATION OF REFERENCE NUMERALS

- 2:: crankshaft
- 3:: intake camshaft
- 23:: Oldham ring
- 30:: Oldham coupling
- 40:: groove portion
- 41:: recess portion
- 50:: protruding portion
- A:: driving-side rotation member
- B:: driven-side rotation member
- C:: phase adjustment mechanism
- M:: electric actuator
- X:: rotation axis
- Y:: eccentric axis

## Claims

1. A valve opening and closing timing control apparatus comprising:
a driving-side rotation member rotating synchronously with a crankshaft about a rotation axis;
a driven-side rotation member supported to be rotatable about the rotation axis relative to the driving-side rotation member, the driven-side rotation member rotating integrally with at least one of an intake camshaft and an exhaust camshaft; and
a phase adjustment mechanism of a gear type specifying a relative rotation phase between the driving-side rotation member and the driven-side rotation member by a driving force of an electric actuator,
the phase adjustment mechanism including an output gear arranged coaxially with the rotation axis and fixed to the driven-side rotation member and an input gear arranged coaxially with an eccentric axis which is parallel to the rotation axis and connected to the driving-side rotation member via an Oldham coupling, the input gear being configured to rotate relative to the output gear by an angle corresponding to a difference between a teeth number of the output gear and a teeth number of the input gear based on a revolution of a position of the eccentric axis about the rotation axis by the driving force of the electric actuator in a state where a portion of a teeth portion of the output gear is meshed with a portion of a teeth portion of the input gear,
the Oldham coupling including an Oldham ring arranged between the driving-side rotation member and the input gear,
a groove portion in a linear form and a protruding portion in a rectangular form being arranged between the driving-side rotation member and the Oldham coupling, the groove portion being provided at one of the driving-side rotation member and the Oldham ring facing each other and the protruding portion being provided at the other of the driving-side rotation member and the Oldham ring, the groove portion and the protruding portion slidably engaging with each other,
a groove portion in a linear form and a protruding portion in a rectangular form being arranged between the Oldham ring and the input gear, the groove portion being provided at one of the Oldham ring and the input gear facing each other and the protruding portion being provided at the other of the Oldham ring and the input gear, the groove portion and the protruding portion slidably engaging with each other.

2. The valve opening and closing timing control apparatus according to claim 1, wherein the input gear includes a flat surface orthogonal to the rotation axis,
one of the protruding portion and the groove portion is provided at the input gear to extend radially inward from an outer circumferential edge of the flat surface of the input gear.

3. The valve opening and closing timing control apparatus according to either claim 1 or 2, wherein the Oldham ring includes a recess portion at a surface where one of the groove portion and the protruding portion is provided, the recess portion being arranged at a position where the one of the groove portion and the protruding portion is inhibited from being provided.

4. The valve opening and closing timing control apparatus according to any one of claims 1 through 3, wherein the protruding portion provided at one of the driving-side rotation member and the Oldham ring between the driving-side rotation member and the Oldham ring is positioned radially outward relative to the protruding portion provided at one of the Oldham ring and the input gear between the Oldham ring and the input gear.
